# EUROPEAN PATENT SPECIFICATION

(11) **EP 0 643 022 B1**
(45) Date of publication and mention of the grant of the patent: **11.06.1997**
(21) Application number: 94306623.3
(22) Date of filing: 09.09.1994
(51) Int. Cl.: C04B 24/02, C04B 24/08

(54) **Cement composition**
Zementmischung
Composition cimentaire

(30) Priority: 14.09.1993 US 121016; 03.02.1994 US 191563
(43) Date of publication of application: 15.03.1995
(73) Proprietor: ARCO Chemical Technology, L.P., Greenville, Delaware 19807 (US)
(72) Inventor: Shawl, Edward T., Wallingford, Pennsylvania 19086 (US); Kesling, Haven S. Jr., Drexel Hill, Pennsylvania 19026 (US)
(74) Representative: Cropp, John Anthony David

(56) References cited:
- EP-A- 0 373 621
- US-A- 4 547 223
- US-A- 4 828 619
- US-A- 5 174 820

## Description

### Field of the Invention

The present invention relates to cement compositions which contain a shrinkage reducing amount of synergistic combination of a monoether of the formula R₁O(AO)ₙ H wherein A is a C₂-C₄ alkylene group or a combination of C₂-C₄ alkylene groups, n is 1-10, and R₁ is a C₁-C₁₀ alkyl or cycloalkyl group, together with a dihydroxy compound of the formula HO(AO)ₙH where A is as above described and n is 1-8.

### Description of the Prior Art

An important disadvantage of cement mortar and concrete is the tendency to shrink and crack upon setting and drying.

U.S. Patent 4,547,223 and published Japanese Application 59-128240 address this problem and suggest the use of compounds of the general formula:

RO(AO)ₙH

in which R represents a C₁₋₇ alkyl or C₅₋₆ cycloalkyl radical, A represents one or more C₂₋₃ alkylene radicals, and n is 1-10 as shrinkage reducing additives for cement.

U.S. Patent 5,174,820 suggests reducing the dry shrinkage of cement by the addition thereto of terminal alkyletherified or terminal alkylesterified compounds of polymers having -C₂H₅O- and/or -C₃H₆O- as a repetitive unit.

Japan Patent Application No. 58-60293 suggests reducing dry shrinkage of cement by the addition thereto of compounds of the formula:

R₁OXₘYₙR₂

where R₁ and R₂ represent aliphatics, alicyclics or aromatics having 1 to 10 carbon atoms, X represents -CH₂CH₂0-, Y represents -CH(CH₃)CH₂O-, m and n are 1 or greater, and m + n is 1 to 15.

Ostrikov, et al., Kolloidnyi Zhumal, Vol. 27, pp 82-86 (1965) suggests the addition of anhydrous glycerin to cement.

U.S. Patent 5,181,961 relates to the use of compounds of the formula ROH where R is an alkyl group having 4 to 6 carbon atoms or a cycloalkyl group having 5 to 6 carbon atoms as shrink reducing cement additives. The patent mentions that other shrinkage-reducing agents may be jointly used.

Canadian Patent 967,321 suggests the use of polyoxyalkylene glycols, esters, ethers and mixtures to reduce foaming in cementitious mixtures and the like.

Despite the efforts of prior workers, the problem of shrinkage and crack formation in the drying and setting of cement compositions remains a serious problem.

### Brief Description of the Invention

In accordance with the present invention, it has been found that dry shrinkage and cracking of cement compositions can be significantly reduced by incorporating in the cement composition an effective amount of a synergistic additive combination of a component having the formula R₁O(AO)ₙH wherein A is a C₂-C₄ alkylene group or a combination of C₂-C₄ alkylene groups, n is 1-10, and R₁ is an alkyl or cycloalkyl group having 1 to 10 carbon atoms, together with a dihydroxy compound having the formula HO(AO)ₙH where A is as above described and n is 1-8, such as dipropylene glycol, tripropylene glycol, the higher oligomers of propylene glycol and mixtures of these, isobutylene glycol, diisobutylene glycol, 1,3-diols such as 2-methyl-1,3-propanediol, and 1,4-butanediol. Ethoxylated and/or propoxylated products made from the monomeric diols can be used.

Illustratively, in the above formulations A is -CH₂-CH₂-, 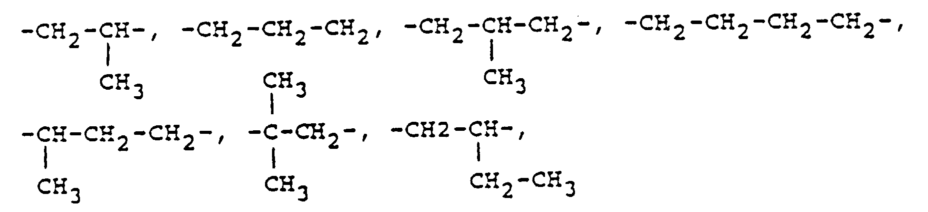 and the like.

Of the component having the formula R₁O(AO)ₙH, dipropylene glycol mono t-butyl ether and tripropylene glycol mono t-butyl ether are especially preferred additives. Mixtures of these additives can be used as can mixtures with corresponding diethers.

A useful additive mixture is that which is prepared by the reaction at elevated temperature of a glycol such as dipropylene glycol with an olefin such as isobutylene in the presence of an acid catalyst. Typical product mixtures resulting from such a reaction contain unreacted glycol, glycol mono alkyl ether and glycol dialkyl ether; the relative amounts of product mixture components can be varied widely by varying the ratio of reactants, the reaction temperature, and product purification conditions.

Of the component having the formula HO(AO)ₙH, dipropylene glycol and tripropylene glycol are preferred.

Generally, the components of the synergistic additive mixture are used in a weight ratio of 1:10 to 10:1 parts, preferably 1:2 to 10:1 parts of R₁O(AO)ₙH to parts of HO(AO)ₙH.

The cements in which the shrinkage-reducing agent of the invention may be used include ordinary, quick-hardening, and moderate-heat portland cements, alumina cement, blast-furnace slag cement, and flash cement. Of these, portland cements of the ordinary and quick-hardening types are particularly desirable.

The quantity of synergistic additive mixture used may vary with various factors. The quantity of the shrinkage-reducing agent combination to be used in accordance with the invention is usually in the range of 0.1-10%, preferably 0.5-4%, based on the weight of cement. If the quantity is less than 0.1% by weight, the additive combination will give only a little shrinkage-reducing effect. If the quantity exceeds 10 wt%, costs of the additive are excessive. The quantity of water to be used for setting the cement can vary, generally weight ratios of water to cement in the range 0.25:1 to 0.7:1, preferably 0.3:1 to 0.5:1 are satisfactory. Where necessary, an aggregate such as pebble, gravel, sand, pumice, or fired pearlite may be employed in conventional amounts. The quantity of the shrinkage-reducing agent combination is usually 0.1-10%, based on the weight of the cement, or usually 0.02-3% on the basis of the total weight of the cement, shrinkage-reducing agent, water and aggregate combined.

Various other conventional ingredients may also be used. Among the optionally employable ingredients are: conventional hardening accelerators, e.g. metal chlorides such as calcium chloride and sodium chloride, metal sulfates, such as sodium sulfate, and organic amines such as triethanol-amine; ordinary hardening retarders, e.g. alcohols, sugars, starch and cellulose; reinforcing-steel corrosion inhibitors such a sodium nitrate and calcium nitrite; water reducing agents and high-range water reducers such as lignosulfonic acids and their salts, and derivatives, hydroxylated carboxylic acids and their salts, condensation products of naphthalenesulfonic acids and formalin, sulfonated melamine polycondensation products, amines and their derivatives, alkanolamines, and inorganic salts such as borates, phosphates, chlorides and nitrates; air entrainers; super plasticizers; and the like. The quantity of such an optional ingredient or ingredients is usually 0.05-6% by weight of the cement.

The manner of adding the shrinkage-reducing agent combination of the invention to the cement may be the same as with ordinary cement admixtures. For example, the shrinkage-reducing combination is admixed with a suitable proportion of water and then this composition is mixed with cement and aggregate. As an alternative, a suitable amount of the shrinkage-reducing agent combination may be added when cement, aggregate and water are mixed.

The concrete and the like incorporating the shrinkage-reducing agent combination according to the invention may be applied in conventional ways. For example, it may be trowelled, filled in forms, applied by spraying, or injected by means of a caulking gun. Hardening or curing of the concrete and the like may be by any of the air drying, wet air, water and heat-assisted (steam, autoclave, etc.) curing techniques. If desired, two or more such techniques may be combined. The respective curing conditions may be the same as in the past.

The addition of the shrinkage-reducing agent combination of the invention to the cement will markedly reduce the drying shrinkage of the resulting concrete as compared with that of the plain concrete or as compared to the additives used singly. The admixture according to the invention, even when added in a large proportion (e.g. several percent), does not substantially reduce the strength of the product.

The following examples illustrate the invention:

### Example 1:

Drying shrinkage cracking of cement pastes and mortar mixes was measured using the ring test method developed by Shah, et al. (ACI Materials Journal, Vol. 89, pp 289-295, 1992). A mold consisting of a 12" diameter, removable, carbon steel outer ring and a 8 5/8" OD x 3" x 1/2" thick carbon steel inner ring mounted on a 12'' diameter carbon steel base plate was used for the test. Test samples were placed in the mold and cured for 6 hours at 73°F and 100%RH, then the outer ring was removed, the top of the sample was coated with a silicone-based caulk and the ring was held at 73°F and 50% RH and monitored for crack formation.

A typical mortar mix for a 2% additive mix was made using 1750g Type I Portland cement, 3500g sand (saturated, surface dry) and 840g water for a water to cement ratio of 0.48 and 35g additive for a 2% additive by weight on cement. The total weight of water and additive was maintained at 875g for other additive concentrations. Results are shown in the following Table I. The restrained shrinkage test is a severe measure of drying shrinkage because of the short cure time, the hoop stress of the ring, and the drying conditions. The combination of glycol ether with dipropylene glycol greatly increased the time before the ring cracked compared to similar additive levels of either component.

**TABLE I:**

| Mortar Mix With Synergistic Shrinkage Reducing Agent Combinations | | |
|---|---|---|
| **Additive** | **Wt% on Cement** | **Days to Crack** |
| None | | 7 days |
| DPTB | 0.5% | 11 days |
| | 1% | 21 days |
| | 2% | 28 days |
| DPG | 2% | 14 days |
| TBA | 1% | 15 days |
| | 2% | 13 days |
| DPTB/DPG | 1%/0.5% | 34 days |
| | 1%/1% | 35 days |
| | 1.5%/0.5% | 48 days |

In the above Table I, DPTB is dipropylene glycol mono tertiary butyl ether, DPG is dipropylene glycol, and TBA is tertiary butyl alcohol.

### Example 2: Mortar Mix with Water Reducer Added

The procedure of Example 1 was repeated except that a commercial water reducer (WR), 6.6g of Daracem 55, and a commercial air entrainer (AE), 1.2g Daravair M, were added to the mortar mix. Although the water reducer and air entrainer by themselves had no effect on the time to crack formation in the restrained shrinkage test, the combination of water reducer and air entrainer with dipropylene glycol t-butyl ether, DPTB, significantly improved the performance of DPTB. The addition of dipropylene glycol, DPG, to give a blend of water reducer and air entrainer with DPTB and DPG gave an additional significant enhancement of performance.

**TABLE II:**

| Synergistic Effect of Water Reducer Combined With Shrinkage Reducing Agent Combinations | | |
|---|---|---|
| **Additive** | **Wt% on Cement** | **Days to Crack** |
| None (with WR and AE) | | 6 days |
| DPTB (with WR and AE) | 1% | 32 days |
| DPTB/DPG (no WR or AE) | 1%/0.5% | 34 days |
| DPTB/DPG (with WR and AE) | 1%/0.5% | 44 days |

In the above Table II, DPTB is dipropylene glycol mono tertiary butyl ether, and DPG is dipropylene glycol.

### Example 3: Mortar mix with reaction product from DPG Isobutylene

The procedures of Example 1 were repeated except that the shrinkage reducing agent was the material obtained by the reaction of dipropylene glycol with isobutylene. The material contained 40% dipropylene glycol mono t-butyl ether, 55% dipropylene glycol and 5% dipropylene glycol di-t-butyl ether.

In preparation of the additive mixture, isobutylene (0.8 mol) is introduced into a suitable pressure vessel containing dipropylene glycol (1.0 mol) and Amberlyst 15 acid catalyst (0.02 mol) heated to 50°C. The rate of addition of isobutylene is adjusted to maintain a temperature of 50-60°C and a pressure of 50-60 psig. Addition of isobutylene takes about 1 hour; the reactor is held at 50°C for another 3 hours. The product is then removed from the reactor, separated from the acid catalyst and recovered by stripping off any unreacted isobutylene and light by-products. A typical product obtained from this process was used in this example.

**TABLE III:**

| Mortar Mix Using Reaction Product Of Glycol Ether Synthesis | | |
|---|---|---|
| Additive | Wt% on Cement | Days to Crack |
| None | | 7 days |
| DPTB | 0.5% | 11 days |
| | 1% | 21 days |
| DPG | 2% | 14 days |
| Reactor Blend | 0.8% DPTB, 1.1% DPG, 0.1% DPDTB | 25 days |

In the above Table III, DPTB is dipropylene glycol mono tertiary butyl ether, DPG is dipropylene glycol, and DPDTB is dipropylene glycol ditertiary butyl ether.

As shown by the examples, the combination of DPTB with DPG increases the time to crack formation much more than would be expected for the individual components.

From the above results it can be seen that substantial improvements in shrinkage as manifested by time to crack are achieved through the use of the additive combination of the invention such as the combination of dipropylene glycol mono tertiary butyl ether and dipropylene glycol. An additional synergistic increase in time to crack formation is observed with a water reducer included in the combination.

## Claims

1. A cement composition comprised of cement and a shrinkage reducing amount of a synergistic additive combination of a compound having the formula:
R₁O(AO)ₙH wherein A is a C₂-C₄ alkylene group or a combination of C₂-C₄ alkylene groups, n is 1-10, and R₁ is a C₁-C₁₀ alkyl or cycloalkyl group, together with a dihydroxy compound of the formula HO(AO)ₙH where A is as above and n is 1-8.

2. The composition of claim 1 wherein the additive combination comprises dipropylene glycol mono t-butyl ether and dipropylene glycol.

3. The composition of any preceding claim also containing conventional cement additives.

4. The composition of any preceding claim containing an aggregate.

5. The composition of any preceding claim containing a water reducer and an air entrainer.

6. A cement composition according to any preceding claim containing water as a hardening agent.

7. A synergistic additive combination comprising a compound selected from dipropylene glycol mono-t-butyl ether, tripropylene glycol mono-t-butyl ether and mixtures thereof and a dihydroxy compound selected from dipropylene glycol, tripropylene glycol and mixtures thereof.

## Patentansprüche

1. Zementzusammensetzung aus Zement und einer die Volumenreduktion vermindernden Menge einer synergistischen Additivkombination aus einer Verbindung der Formel:
R₁O(AO)ₙH,
in der A eine C₂₋₄-Alkylengruppe oder eine Kombination von C₂₋₄-Alkylengruppen darstellt, n 1 bis 10 bedeutet und R₁ eine C₁₋₁₀-Alkyl- oder -Cycloalkylgruppe ist, mit einer Dihydroxyverbindung der Formel HO(AO)ₙH, in der A wie oben definiert ist, und n 1 - 8 bedeutet.

2. Zusammensetzung gemäß Anspruch 1, in der die Additivkombination Dipropylenglykolmono-t-butylether und Dipropylenglykol enthält.

3. Zusammensetzung gemäß einem der vorstehenden Ansprüche, die zusätzlich übliche Zementadditive enthält.

4. Zusammensetzung gemäß einem der vorstehenden Ansprüche, die ein Aggregat enthält.

5. Zusammensetzung gemäß einem der vorstehenden Ansprüche, die einen Betonverflüssiger und einen Luftporenbildner enthält.

6. Zementzusammensetzung gemäß einem der vorstehenden Ansprüche, die Wasser als Aushärter enthält.

7. Synergistische Additivkombination, welche eine Verbindung ausgewählt aus Dipropylenglycolmono-t-butylether, Tripropylenglycolmono-t-butylether und Gemische davon, und eine Dihydroxyverbindung ausgewählt aus Dipropylenglycol, Tripropylenglycol und Gemische davon enthält.

## Revendications

1. Composition de ciment composée de ciment et d'une quantité réduisant le retrait d'une combinaison synergique d'additifs comprenant un composé ayant la formule :
R₁O(AO)ₙH
dans laquelle A est un groupe alkylène en C₂₋₄ ou une combinaison de groupes alkylènes en C₂₋₄, n est 1 à 10, et R₁ est un groupe alkyle ou cycloalkyle en C₁₋₁₀, avec un composé dihydroxy de formule HO (AO)ₙH, dans laquelle A est tel que défini plus haut et n est 1 à 8.

2. Composition suivant la revendication 1, dans laquelle la combinaison d'additifs comprend l'éther mono-t-butylique de dipropylène glycol et le dipropylène glycol.

3. Composition suivant l'une quelconque des revendications précédentes, contenant aussi des additifs classiques pour ciment.

4. Composition suivant l'une quelconque des revendications précédentes, contenant un agrégat.

5. Composition suivant l'une quelconque des revendications précédentes, contenant un réducteur d'eau et un entraîneur d'air.

6. Composition de ciment suivant l'une quelconque des revendications précédentes, contenant de l'eau comme agent de durcissement.

7. Combinaison synergique d'additifs comprenant un composé choisi parmi l'éther mono-t-butylique de dipropylène glycol, l'éther mono-t-butylique de tripropylène glycol et leurs mélanges, et un composé dihydroxy choisi parmi le dipropylène glycol, le tripropylène glycol et leurs mélanges.
